(19) Europäisches Patentamt
European Patent Office
Office européen des brevets

(11) **EP 1 706 608 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(21) Anmeldenummer: 05700738.7

(22) Anmeldetag: **07.01.2005**

(51) Int Cl.:
***F01N 3/28*** *(2006.01)*      ***B01J 35/04*** *(2006.01)*

(86) Internationale Anmeldenummer:
**PCT/EP2005/000082**

(87) Internationale Veröffentlichungsnummer:
**WO 2005/068798 (28.07.2005 Gazette 2005/30)**

(54) **WABENKÖRPER AUS LAGEN MIT UMSTÜLPUNGEN UND LAGEN MIT GEGENSTRUKTUREN**

HONEYCOMB BODY CONSISTING OF LAYERS COMPRISING INVERTED SECTIONS AND LAYERS COMPRISING COUNTER-STRUCTURES

CORPS EN NID D'ABEILLES COMPOSE DE COUCHES COMPRENANT DES PARTIES INVERSEES ET DE COUCHES COMPRENANT DES CONTRE-STRUCTURES

(84) Benannte Vertragsstaaten:
**DE ES FR GB IT**

(30) Priorität: **13.01.2004 DE 102004001947**

(43) Veröffentlichungstag der Anmeldung:
**04.10.2006 Patentblatt 2006/40**

(73) Patentinhaber: **Emitec Gesellschaft für Emissionstechnologie mbH**
**53797 Lohmar (DE)**

(72) Erfinder:
• **MAUS, Wolfgang**
  **51429 Bergisch Gladbach (DE)**
• **BRÜCK, Rolf**
  **51429 Bergisch Gladbach (DE)**

(74) Vertreter: **Rössler, Matthias**
**KNH Patentanwälte,**
**Kahlhöfer Neumann Herzog Fiesser,**
**Karlstrasse 76**
**40210 Düsseldorf (DE)**

(56) Entgegenhaltungen:
**EP-A- 0 558 064**          **EP-A- 0 870 909**
**DE-A1- 3 506 610**        **DE-A1- 3 844 350**

• **PATENT ABSTRACTS OF JAPAN Bd. 018, Nr. 553 (C-1263), 21. Oktober 1994 (1994-10-21) & JP 06 198197 A (TOYO RADIATOR CO LTD), 19. Juli 1994 (1994-07-19)**

EP 1 706 608 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf einen aus abwechselnden im wesentlichen glatten und zumindest teilweise strukturierten Lagen aufgebauten Wabenkörper. Die Struktur der strukturierten Lagen ist dabei typischerweise eine Wellung, wobei diese noch Unterstrukturen in Form von Umstülpungen aufweist.

Gerade im Automobilbau hat sich durch sich stetig verschärfende gesetzliche Grenzwerte in vielen Ländern der Einsatz von katalytischen Konvertern zur Umsetzung von schädlichen Anteilen des Abgases durchgesetzt. Oftmals werden als Katalysator-Trägerkörper in katalytischen Konvertern oder auch als Filterkörper Wabenkörper eingesetzt, weil diese eine große Reaktions- bzw. Filteroberfläche pro Volumeneinheit zur Verfügung stellen.

Solche Wabenkörper werden im wesentlichen aus keramischem Werkstoff oder als aus mehreren Lagen bestehende metallische Wabenkörper ausgebildet. Man unterscheidet bei metallischen Wabenkörper vor allem zwei typische Bauformen. Eine frühe Bauform, für die die DE 29 02 779 A1 typische Beispiele zeigt, ist die spiralige Bauform, bei der eine im wesentlichen glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen gebildet, wobei die Blechlagen zunächst in einem oder mehreren Stapeln angeordnet und dann miteinander verschlungen werden. Dabei kommen Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Blechlagen mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben. Darüber hinaus ist es auch bekannt, in einem Wabenkörper eine Aussparung für einen Sensor freizulassen, insbesondere zur Unterbringung einer Lambdasonde. Ein Beispiel dafür ist in der DE 88 16 154 U1 beschrieben. Wabenkörper finden auch Einsatz als Adsorberstrukturen, in denen Schadstoffanteile wie zum Beispiel Stickoxide zumindest vorübergehend gespeichert werden können, sowie als Filter, insbesondere Partikelfilter, die offen oder geschlossen ausgebildet sein können.

Besonders bei metallischen Wabenkörper hat es sich gezeigt, dass sich diese beim Einsatz im Abgassystem eines Automobils im Verlaufe der Zeit aufgrund der thermischen Wechselbelastungen verformen. Insbesondere ist es bekannt, dass der Wabenkörper teleskopiert, das heißt, dass sich ein Teil des Wabenkörpers teilweise aufgrund der pulsatilen Gasströme; denen er ausgesetzt ist, aus einer Stirnseite des Wabenkörpers hinausschiebt, oder dass der Wabenkörper eine Tonnenform annimmt, also dass sich der Durchmesser des Wabenkörpers im Bereich der Gaseintritts- und/oder Gasaustrittsseite verkleinert. Solche und andere Verformungen führen zu oder beruhen auf der Verschiebbarkeit von benachbarten Wände der Hohlräume in Strömungsrichtung, die beispielsweise bei einer fehlenden oder fehlerhaften Anbindung an benachbarte Wände der Hohlräume, die bevorzugt durch thermische Fügeverfahren wie beispielsweise Löten oder Schweißen ausgebildet wird, auftreten kann.

Aus der EP 0 298 943 A2 ist in diesem Zusammenhang ein Katalysator-Trägerkörper bekannt, der nicht gelötet ist, sondern der durch das Zusammenwirken von Stegen und Ausnehmungen in entsprechenden benachbarten Lagen mechanisch fixiert ist. Aus der DE 27 33 640 A1 ist es bekannt, durch Zungen und entsprechende Ausnehmungen in benachbarten Lagen eine entsprechende Verriegelung zu erreichen.

Als problematisch erweist sich die Verriegelung benachbarter Lagen dann, wenn innerhalb des Wabenkörpers beispielsweise in strukturierten Lagen Umstülpungen bestehen, die der Strömungsbeeinflussung, insbesondere auch der Verbindung von in Umfangrichtung benachbarten Hohlräumen dienen und wie sie aus dem oben genannten Stand der Technik bekannt sind.

Davon ausgehend liegt der Erfindung die Aufgabe zugrunde, einen metallischen Wabenkörper anzugeben, der Maßnahmen zur Strömungsbeeinflussung enthält und dessen Lagen wirkungsvoll vor einer relativen Verschiebung benachbarter Lagen in Strömungsrichtung geschützt sind.

Diese Aufgabe wird gelöst durch einen Wabenkörper mit den Merkmalen des Anspruchs 1. Vorteilhafte Weiterbildungen sind Gegenstand der abhängigen Ansprüche.

Ein erfindungsgemäßer Wabenkörper ist aus abwechselnden im wesentlichen glatten und zumindest teilweise strukturierten Lagen gebildet und dient insbesondere als Katalysator-Trägerkörper und/oder Filter, vorzugsweise für das Abgassystem eines Automobils. Dabei bilden die Lagen für ein Fluid im wesentlichen in einer axialen Strömungsrichtung durchlässige Hohlräume, wobei die strukturierten Lagen Strukturextrema aufweisen, die mit benachbarten im wesentlichen glatten Lagen in Kontakt sind, und wobei die strukturierten Lagen im Bereich ihrer Strukturextrema Umstülpungen aufweisen, die in die Hohlräume hineinragen und in einem zur Strömungsrichtung senkrechten Querschnitt durch den Wabenkörper eine zu den Strukturextrema etwa inverse Form aufweisen, so dass im Bereich der Umstülpungen Unterbrechungen in den Strukturextrema entstehen. Erfindungsgemäß sind im Bereich der Umstülpungen und/oder der Strukturextrema Gegenstrukturen in den im wesentlichen glatten Lagen ausgebildet, die mit den Strukturextrema und/oder mit den Umstülpungen in Eingriff stehen.

Besonders günstig ist es, wenn die Strukturextrema und/oder Umstülpungen mit den Gegenstrukturen formschlüssig zusammenwirken, so dass insbesondere eine Verschiebung der Lagen untereinander in Strömungsrichtung verhindert wird.

Unter einer Umstülpung versteht man in diesem Zusammenhang eine Struktur, die durch Umformung einer strukturierten Lage ausgebildet wird. Eine solche Umstülpung schafft eine durchströmbare Öffnung, die eine Verbindung zu einem benachbarten Hohlraum bildet. Durch diese Öffnung kann somit Fluid wie zum Beispiel Abgas, welches durch den Wabenkörper strömt, von einem Hohlraum zu einem benachbarten Hohlraum gelangen. Diese Öffnung ist bevorzugt in Strömungsrichtung ausgebildet. Umstülpungen führen aufgrund der zusätzlichen Anströmkanten der Umstülpung in vorteilhafter Weise zu einer Verwirbelung der Strömung, die der Ausbildung von laminaren Randströmungen entgegenwirkt. Es ist daher sinnvoll, dass eine formschlüssige Verbindung mit Gegenstrukturen nicht die ganze so geschaffene Öffnung wieder verschließt, sondern nur einen ganz kleinen Teil des Öffnungsquerschnittes beansprucht. Im günstigsten Fall kann die formschlüssige Verbindung Dimensionen nur in der Größenordnung der Dicke der Lagen haben.

Insbesondere ist es vorteilhaft, die Umstülpungen symmetrisch in Bezug auf die Strukturierung, also symmetrisch zum Strukturminimum oder -maximum, auszubilden. Unter Strukturierung ist insbesondere eine z. B. bei metallischen Wabenkörpern übliche Wellung, beispielsweise eine Sinusähnliche- oder Dreiecksförmige Wellung zu verstehen. Unter im wesentlichen durchgehenden Strukturen sind insbesondere Strukturen zu verstehen, die sich - bis auf die Umstülpungen - über die gesamte Länge des Wabenkörpers in Strömungsrichtung erstrecken. Bevorzugt ist die Abdeckung des durchströmbaren Querschnitts, die die Gegenstrukturen beim Eingriff in die Umstülpung bewirken, möglichst gering. Eine Ausbildung der Umstülpungen im Bereich der Strukturextrema kann beispielsweise auch bedeuten, dass nur ein Teil der Strukturierung zur Umstülpung beiträgt, dass insbesondere nur ein kleinerer Teil des die Strukturierung bildenden Materials der Wände umgestülpt wird, so dass die Grundform der Strukturierung im Bereich der Umstülpung erhalten bleibt.

Wenn man im wesentlichen glatte Lagen, insbesondere Blechlagen oder aus Fasern gebildete Lagen mit einer Gegenstruktur versieht, die im Wabenkörper etwa quer zur späteren Strömungsrichtung verlaufen soll, so müssen diese Lagen bei der Bildung des Wabenkörpers gewickelt werden, wobei die Wickelrichtung gerade so ist, dass die Gegenstrukturen ein solches Wickeln erheblich erschweren oder gar verhindern würden, da sie die Lage versteifen. Die Gegenstrukturen sollten daher so gestaltet sein, dass die Biegsamkeit der Lagen zum Wickeln auch mit kleinen Radien ausreicht. Dies kann man auf verschiedene Weise erreichen, insbesondere natürlich dadurch, dass die Gegenstrukturen keine Erhebungen oder Vertiefungen, sondern einfach Löcher sind, in die Extrema der strukturierten Lagen hineinragen. Aber auch Gegenstrukturen als Erhebungen und/oder Vertiefungen sind möglich, solange diese durch geeignete Dimensionierung und/oder Unterbrechungen biegsam genug sind. Durchgehende Erhebungen und/oder Vertiefungen können durch Unterbrechungen, beispielsweise Löcher oder Entlastungsschlitze, so verändert werden , dass eine Lage trotz vorhandener Gegenstrukturen noch genügend biegsam ist.

Durch die beschriebene Ausbildung von Umstülpung und Gegenstruktur kann es bei einem erfindungsgemäßen Wabenkörper nicht zu einer relativen Verschiebung zweier Hohlraumwände, die in einer Richtung, die im wesentlichen senkrecht zur Strömungsrichtung ist, benachbart sind, in Strömungsrichtung kommen, da nur der Wabenkörper als ganzes verschoben werden kann. Dies ist selbst dann der Fall, wenn die Lagen des erfindungsgemäßen Wabenkörpers thermisch miteinander verbunden sind, z. B. gelötet oder geschweißt, und sich diese thermisch ausgebildeten Verbindungen zumindest teilweise gelöst haben. Dies liegt daran, dass die Gegenstrukturen, die in die Umstülpung eingreifen, eine relative Verschiebung zweier in einer Richtung, die im wesentlichen senkrecht zur Strömungsrichtung ist, benachbarter Hohlraumwände verhindern.

Eine Lage kann aus verschiedenen Arten von Materialien ausgebildet sein. Beispielsweise ist die Ausbildung zumindest eines Teils der Lagen aus Blech, bevorzugt korrosions- und hochtemperaturfesten Stahlblechen oder auch Aluminiumblechen möglich und erfindungsgemäß. Weiterhin kann erfindungsgemäß zumindest ein Teil der Lagen aus zumindest teilweise für ein Fluid durchströmbarem Material, beispielsweise einem metallischen Fasermaterial ausgebildet sein. Auch die Ausbildung zumindest eines Teils der Lagen aus einem Kompositmaterial, beispielsweise einem für ein Fluid zumindest teilweise durchströmbaren Material aus keramischen und metallischen Fasern, ist möglich und erfindungsgemäß. Hier kann eine keramische Faserlage durch eine fügetechnische Verbindung mit Blechstreifen verstärkt sein.

Ein erfindungsgemäßer Wabenkörper kann vorteilhafterweise als Katalysator-Trägerkörper und/oder Filter im Abgassystem eines Automobils eingesetzt werden. Besonders bevorzugt kann ein Einsatz in Form eines Partikelfilters erfolgen. Ein solcher Partikelfilter kann sowohl offen, als auch geschlossen sein. Bei offenen Partikelfiltern können Partikel, deren Abmessungen deutlich größer sind als die Poren der verwendeten Filtermedien, den Partikelfilter durchwandern, so dass ein Verstopfen des Filters nicht möglich ist, während durch einen geschlossenen Partikelfilter keine Partikel durchtreten können. Weiterhin ist in vorteilhafter Weise der Einsatz eines erfindungsgemäßen Wabenkörpers motornah, insbesondere vor einem Turbolader möglich. Auch der Einsatz als Adsorber für eine oder mehrere Komponenten des Abgases, wie beispielsweise von Stickoxiden ($NO_x$), ist möglich und erfindungsgemäß. Weiterhin ist insbesondere der prinzipielle Aufbau eines erfindungsgemäßen Wabenkörpers wie oben im Stand der Technik beschrieben, also beispielsweise als Spiralform, S-Form oder Evolventenform, möglich und erfindungsgemäß, genauso alle oben im zitierten Stand der Technik beschriebenen Ausführungsformen, Ergänzungen und/oder Einsatzmöglichkeiten.

Gemäß einer vorteilhaften Ausgestaltung des erfindungsgemäßen Wabenkörpers ist der Wabenkörper aus

a) mindestens einer im wesentlichen glatten und mindestens einer zumindest teilweise strukturierten Lage oder

b) mindestens einer zumindest teilweise strukturierten Lage ausgebildet, wobei Umstülpungen und/oder Gegenstrukturen in einer im wesentlichen glatten und/oder in einer zumindest teilweise strukturierten Lage ausgebildet sind. Besonders bevorzugt ist in diesem Zusammenhang, dass der Wabenkörper durch

a) Wickeln mindestens einer Lage oder
b) Stapeln einer Mehrzahl von Lagen zu mindestens einem Stapel und Verwinden mindestens eines Stapels

ausgebildet ist.

Die Ausbildung des Wabenkörpers aus im wesentlichen glatten und/oder zumindest teilweise strukturierten Blechlagen ermöglicht in vorteilhafter Weise die Ausbildung eines erfindungsgemäßen Wabenkörpers. Jedoch ist es genauso vorteilhaft und erfindungsgemäß möglich, den Wabenkörper nicht vollständig aus Blechlagen aufzubauen, sondern zumindest zum Teil andere Lagen, insbesondere metallische Lagen einzusetzen. Hierbei kann es sich zum Beispiel um Lagen aus zumindest teilweise für ein Fluid durchströmbarem Material, beispielsweise metallische Fasermatten, handeln, die beim Aufbau eines Partikelfilters Verwendung finden können, jedoch auch um Kompositmaterialien, die beispielsweise aus keramischen und metallischen Fasern und gegebenenfalls aus Abschnitten aus Blech bestehen können. Auch der Einsatz von gelochten Blechlagen ist für manche Anwendungen von Vorteil.

Beim Aufbau des Wabenkörpers zumindest teilweise aus Blechlagen kann der Wabenkörper beispielsweise in Spiral-Form, in S-Form oder in Evolventenform gewickelt bzw. verwunden werden, wobei für Details auf den oben zitierten Stand der Technik verwiesen wird. Jedoch sind auch andere Formen eine Wabenkörpers möglich und erfindungsgemäß.

Gemäß einer vorteilhaften Ausgestaltung des erfindungsgemäßen Wabenkörpers, bei dem Umstülpungen in zumindest teilweise mit einer Strukturhöhe H strukturierten Lagen ausgebildet sind, ist die Höhe h der Umstülpungen kleiner oder gleich der Strukturhöhe H.

Gemäß einer weiteren vorteilhaften Ausgestaltung des erfindungsgemäßen Wabenkörpers bei dem Umstülpungen in zumindest teilweise mit einer Strukturhöhe H strukturierten Lagen ausgebildet sind, ist die Höhe h der Umstülpungen größer als die Strukturhöhe H.

Je nach Höhe h der Umstülpungen können die Gegenstrukturen in ihrer Art angepasst ausgebildet werden. Beispielsweise kann die Gegenstruktur dann, wenn die Höhe h der Umstülpungen größer ist als die Strukturhöhe H der strukturierten Lagen, einfach in einem Schlitz in der benachbarten beispielsweise im wesentlichen glatten Lage bestehen. Vorteilhafterweise ist die Ausdehnung des Schlitzes in Strömungsrichtung an die entsprechende Ausdehnung der Umstülpung angepasst, so dass sich Formschluss ergibt. Eine weitere Möglichkeit besteht darin, dass auch die Gegenstruktur aus einer entsprechenden Umstülpung, bzw. aus der Ausnehmung, die die Umstülpung in den Strukturen hinterlässt, besteht. Bei entsprechender Ausdehnung der Umstülpungen in Strömungsrichtung ist es auch hier möglich, einen Formschluss von Umstülpung und Gegenstruktur zwischen zwei benachbarten Wänden der Hohlräume herzustellen.

Ist die Höhe h der Umstülpungen kleiner als die Strukturhöhe H der zumindest teilweise strukturierten Lagen, so kann eine Gegenstruktur als eine in einer im wesentlichen senkrecht zur Strömungsrichtung ausgebildete Mikrostruktur, beispielsweise in Form eines Walles, ausgebildet sein. Hierbei ist es möglich, dass eine mindestens eine Mikrostruktur entsprechend einer ersten und/oder einer zweiten Begrenzung der Umstülpung in Strömungsrichtung ausgebildet ist. So können beispielsweise zwei Gegenstrukturen ausgebildet sein, die gemeinsam in eine Umstülpung eingreifen, wobei der Abstand der Gegenstrukturen in Strömungsrichtung so gewählt werden kann, dass dieser im wesentlichen der Ausdehnung der Umstülpung in Strömungsrichtung entspricht.

Erfindungsgemäß muss nicht jede Umstülpung mit einer Gegenstruktur in Eingriff stehen, je nach Anwendungsfall kann es vorteilhaft sein, nur einen Teil der Umstülpungen mit Gegenstrukturen in Eingriff zu bringen, beispielsweise nur jede zehnte, zwanzigste oder auch jede zweite, vierte, etc. Hierbei ist die Bezeichnung "jede zehnte, zwanzigste", usw., darauf bezogen, dass der zehnte, zwanzigste, usw. Teil der Umstülpungen mit Gegenstrukturen in Eingriff steht.

Gemäß einer weiteren vorteilhaften Ausgestaltung des Wabenkörpers ist die Höhe a einer Gegenstruktur kleiner, bevorzugt wesentlich kleiner, als die Höhe h) der Umstülpungen.

So ist es in vorteilhafter Weise möglich, Gegenstruktur und Umstülpung in Eingriff zu bringen oder sogar einen Formschluss zu erzeugen, ohne dass der Druckverlust der Strömung durch den Kanal signifikant erhöht wird.

Gemäß einer vorteilhaften Ausgestaltung des Wabenkörpers steht jede Umstülpung mit einer Gegenstruktur in Eingriff.

Auch die Ausbildung einer Gegenstruktur für jede Umstülpung ist erfindungsgemäß möglich und kann je nach Anwendungsfall vorteilhaft sein.

Gemäß einer vorteilhaften Ausgestaltung des Wabenkörpers besteht zumindest ein Teil der Gegenstrukturen aus Umstülpungen.

Die Ausbildung der Gegenstrukturen aus Umstülpungen erlaubt in einfacher Weise den Aufbau des Wabenkörpers beispielsweise aus nur einer Art von Lagen, die Umstülpungen aufweisen. Sind diese Umstülpungen entsprechend ausgebildet, so kann beispielsweise auf die Ausbildung von im wesentlichen glatten Lagen verzichtet werden. Weiterhin ist es auch möglich und erfindungsgemäß, auch die im wesentlichen glatten Lagen mit Umstülpungen zu versehen, die mit Umstülpungen in den zumindest teilweise strukturierten Blechlagen in Eingriff bringbar sind. Auch der Aufbau eines Wabenkörpers, bei dem nur ein Teil der Gegenstrukturen Umstülpungen und ein anderer Teil eine andere Art Gegenstrukturen sind, ist möglich und erfindungsgemäß. Bei verschiedenen Arten von Gegenstrukturen kann zum Beispiel in vorteilhafter Weise Einfluss auf die Druckverhältnisse im Inneren des Wabenkörpers genommen werden. Auch die Verteilung der Strömung durch den Wabenkörper in verschiedene Bereiche ist möglich und erfindungsgemäß.

Gemäß einer weiteren vorteilhaften Ausgestaltung des erfindungsgemäßen Wabenkörpers besteht zumindest ein Teil der Gegenstrukturen aus Prägungen.

Die Ausbildung der Gegenstrukturen als Prägungen ist eine besonders einfache Form der Gegenstruktur. Hier können solche Prägungen zum Beispiel in der im wesentlichen glatten und/oder in zumindest teilweise strukturierten Lagen ausgebildet sein.

Besonders bevorzugt ist es in diesem Zusammenhang, dass die Prägungen als Mikrostrukturen ausgebildet sind, die im wesentlichen transversal zur axialen Richtung des Wabenkörpers verlaufen.

Unter Mikrostruktur wird in diesem Zusammenhang eine Struktur verstanden, die beim Aufbau des Wabenkörper zumindest teilweise aus zumindest teilweise strukturierten Lagen eine geringere Strukturhöhe aufweist als die Struktur der zumindest teilweise strukturierten Lagen. Eine Mikrostruktur kann sowohl in im wesentlichen glatten als auch als Sekundärstruktur in zumindest teilweise strukturierten Lagen ausgebildet sein.

Gemäß einer vorteilhaften Ausgestaltung des erfindungsgemäßen Wabenkörpers besteht zumindest ein Teil der Gegenstrukturen aus mindestens zwei in Strömungsrichtung beabstandeten Prägungen.

Zwei oder mehr axial beabstandete Prägungen ermöglichen in vorteilhafter Weise den Formschluss zwischen Umstülpung und Gegenstruktur, ohne dass durch die Zusammenwirkung von Umstülpung und Gegenstruktur ein signifikant erhöhter Druckverlust vorliegt. Insbesondere zwei Prägungen, deren Abstand in Strömungsrichtung bevorzugt den Abmessungen einer Umstülpung in Strömungsrichtung entsprechen, verhindern in vorteilhafter Weise eine relative Verschiebung des Wabenkörpers in Strömungsrichtung, also insbesondere den Teleskopieeffekt und erhöhen so die Lebensdauer des Wabenkörpers.

Gemäß einer weitern vorteilhaften Ausgestaltung des erfindungsgemäßen Wabenkörpers weisen die Prägungen Perforationen, besonders Mikroperforationen auf. Mikroperforationen zeichnen sich dadurch aus, dass ihre Abmessungen deutlich kleiner sind als die Abmessungen der Strukturen der zumindest teilweise strukturierten Lagen. Im Falle von metallischen Lagen, insbesondere Blechlagen, erleichtert die Ausbildung von Perforationen in den Prägungen die Verformbarkeit der Lage, insbesondere die Wickelbarkeit. Durch die Perforationen werden die Prägungen unterbrochen bzw. beschränkt.

Gemäß einer weiteren vorteilhaften Ausgestaltung des erfindungsgemäßen Wabenkörpers ist zumindest ein Teil der Gegenstrukturen als Löcher ausgebildet.

Bei entsprechender Ausgestaltung der Umstülpungen sind die Gegenstrukturen mit diesen in Eingriff bringbar, insbesondere sogar in Formschluss. Löcher als Gegenstrukturen sind einfach anzubringen. Vorteilhafterweise entsprechen die Abmessungen der Löcher in Strömungsrichtung den Abmessungen der Umstülpungen in Strömungsrichtung.

Die Form und Ausgestaltung der Gegenstrukturen sind nicht auf die hier dargelegten Beispiele beschränkt. Insbesondere können auch in einem einzigen Wabenkörper oder auch innerhalb einer einzigen Lage unterschiedliche Formen und Ausgestaltungen von Gegenstrukturen ausgebildet sein.

Gemäß einer weiteren vorteilhaften Ausgestaltung des erfindungsgemäßen Wabenkörpers sind zumindest ein Teil der Gegenstrukturen in einer im wesentlichen glatten Lage ausgebildet.

Dies gestattet beispielsweise das Verhindern einer relativen Verschiebung des Wabenkörpers in Strömungsrichtung in einem aus zumindest einer zumindest zum Teil strukturierten und zumindest einer im wesentlichen glatten Lage.

Gemäß einer weiteren vorteilhaften Ausgestaltung des erfindungsgemäßen Wabenkörpers ist zumindest ein Teil der Gegenstrukturen in einer zumindest teilweise strukturierten Lage ausgebildet.

Dies ermöglicht die Verwirklichung der Erfindung beispielsweise in Wabenkörpern, die nur aus zumindest teilweise strukturierten Lagen, insbesondere metallischen Lagen wie Blechlagen ausgebildet sind.

Jedoch können in gleicher Weise erfindungsgemäß Gegenstrukturen sowohl in im wesentlichen glatten, als auch in zumindest teilweise strukturierten Lagen ausgebildet sein.

Eine weiter vorteilhafte Ausgestaltung eines erfindungsgemäßen Wabenkörpers zeichnet sich dadurch aus, dass der Quotient aus

a) der Summe der Höhe (h) der Umstülpung und der Höhe (a) der Gegenstruktur und
b) dem radialen Abstand (KH) zweier Wände der Hohlräume kleiner als 1 ist.

Das heißt, es ergibt sich folgender Zusammenhang:

$$(h + a)/KH < 1.$$

Eine solche Ausgestaltung der Umstülpungen und der Gegenstrukturen gewährleistet in vorteilhafter Weise eine auch unter den sehr Verschleißfördernden Einsatzbedingungen eines Wabenkörpers beispielsweise als Katalysatorträgerkörper im Abgassystem eines Automobils, die sich beispielsweise durch die Belastung durch stark pulsatile Gasströme und große thermische Gradienten und Transienten auszeichnen, eine gute Dauerhaltbarkeit. Relative Verschiebungen in Strömungsrichtung im Wabenkörper werden wirksam unterbunden.

Gemäß einer weiteren vorteilhaften Ausgestaltung des erfindungsgemäßen Wabenkörpers sind zumindest ein Teil der Lagen metallische Lagen. Besonders bevorzugt ist es in diesem Zusammenhang, dass zumindest ein Teil der metallischen Lagen Blechlagen sind. Vorzugsweise weisen diese eine Dicke von weniger als 60 $\mu$m, bevorzugt weniger als 40$\mu$m, besonders bevorzugt weniger als 25$\mu$m auf.

Gemäß einer weiteren vorteilhaften Ausgestaltung des erfindungsgemäßen Wabenkörpers ist zumindest ein Teil der metallischen Lagen zumindest teilweise für ein Fluid durchströmbar. Besonders bevorzugt ist in diesem Zusammenhang, dass zumindest ein Teil der zumindest teilweise für ein Fluid durchströmbaren metallischen Lagen aus einem metallischen Fasermaterial, insbesondere einem gesinterten metallischen Fasermaterial ausgebildet ist.

Gemäß einer weiteren vorteilhaften Ausgestaltung des erfindungsgemäßen Wabenkörpers ist zumindest ein Teil der Lagen aus einem Kompositmaterial, bevorzugt einem Kompositmaterial aus keramischen und metallischen Fasern, aufgebaut.

Die Erfindung soll im folgenden anhand der in der Zeichnung gezeigten Ausführungsbeispiele beschrieben werden, ohne dass sie auf diese beschränkt ist. Es zeigen:

Fig. 1 eine zumindest teilweise strukturierte Lage mit Umstülpungen;

Fig. 2 eine schematische perspektivische Ansicht eines Teils eines Wabenkörpers;

Fig. 3 einen schematischen Querschnitt durch den Wabenkörperteil von Fig. 2 entlang der Linie III;

Fig. 4 ein Beispiel für Formschluss durch Löcher in einer im wesentlichen glatten Lage gebildete Gegenstrukturen;

Fig. 5 eine anderes Beispiel für eine Formschlussverbindung zwischen glatten und gewellten Lagen mit Umstülpungen;

Fig. 6 ein weiteres Beispiel einer zumindest teilweise strukturierten Lage mit Umstülpungen und entsprechender im wesentlichen glatter Lagen mit Gegenstrukturen;

Fig. 7 einen erfindungsgemäßen Wabenkörper im Querschnitt;

Fig. 8 ein weiteres Beispiel einer zumindest teilweise strukturierten Lage und einer im wesentlichen glatten Lage mit Umstülpungen und Gegenstrukturen im schematischen Querschnitt; und

Fig. 9 ein weiteres Beispiel einer im wesentlichen glatten Lage und einer zumindest teilweise strukturierten Lage mit Umstülpungen und Gegenstrukturen im schematischen Querschnitt.

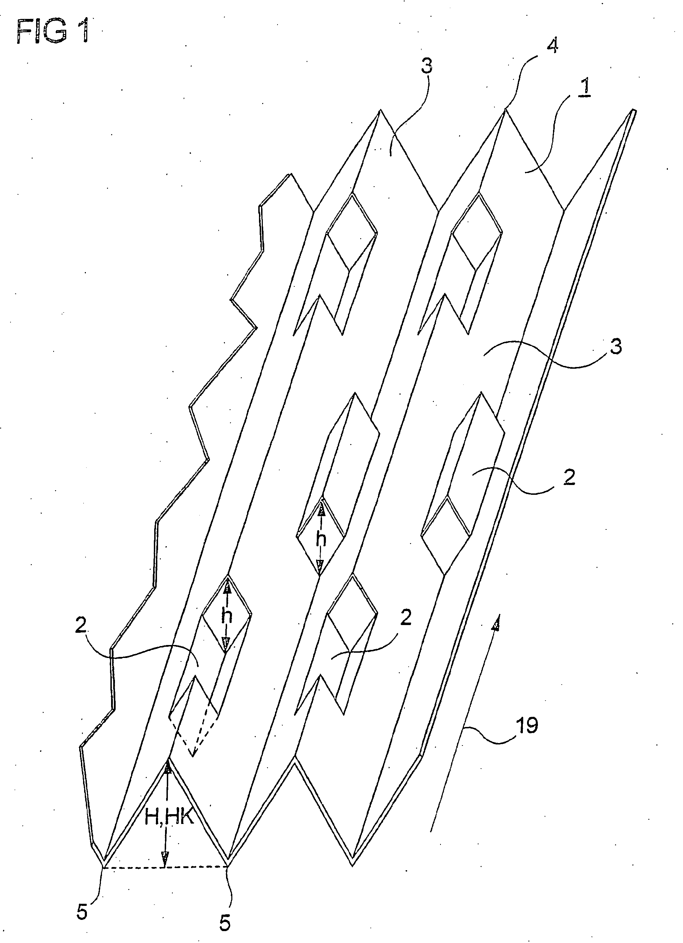

Fig. 1 zeigt eine zumindest teilweise strukturierte Lage 1, beispielsweise aus einer dünnen Metallfolie; insbesondere einer dünnen korrosionsfesten Stahlfolie, mit Umstülpungen 2. Die zumindest teilweise strukturierte Lage 1 weist im vorliegenden Ausführungsbeispiel dreiecksförmige (alle Ausführungen gelten aber in gleicher Weise für andere Wellformen, die sich zeichnerisch aber nicht so übersichtlich darstellen lassen) Strukturen 3 auf, die sich bis auf die Bereiche mit Umstülpungen 2 über die gesamte Länge der Lage 1 erstrecken. Diese Strukturen 3 weisen jeweils Strukturmaxima 4 und Strukturminima 5 auf (gemeinsam als Strukturextrema bezeichnet) und bilden mit anderen Lagen für ein Fluid, beispielsweise ein Abgas, durchströmbare Hohlräume. Jeweils im Bereich der Strukturminima 4 und/oder der Strukturmaxima 5 sind Umstülpungen 2 einer Höhe h ausgebildet. Im Bereich der Strukturextrema 4, 5 ist die Lage 1 in eine Richtung gefaltet. Eine Umstülpung 2 ist eine Umformung des Materials der Lage 1, wobei diese in eine zweite entgegengesetzte Richtung gekrümmt oder gefaltet ist, also eine zu der Grundstruktur etwa inverse Form bildet. Beim Aufbau eines Wabenkörpers zumindest teilweise aus solchen Lagen 1 kann der Wabenkörper im wesentlichen in Richtung der Strömungsrichtung 19 von einem Fluid, insbesondere Abgas, durchströmt werden.

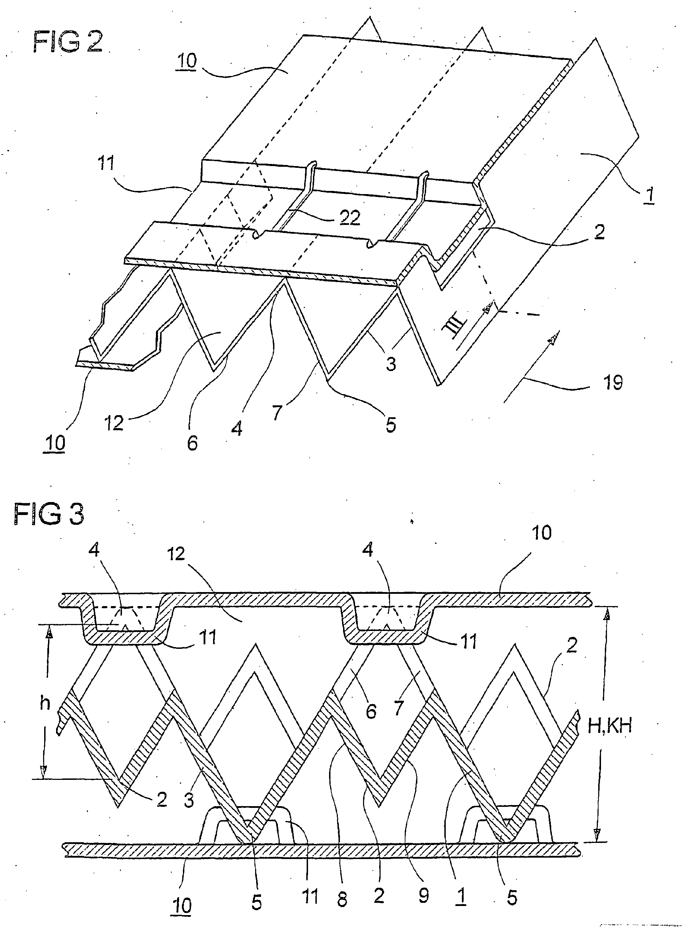

Fig. 2 zeigt eine schematische perspektivische Ansicht des formschlüssigen Zusammenwirkens einer strukturierten 1 und einer im wesentlichen glatten 10 Lage mit Gegenstruktur 11. Fig. 3 zeigt einen Querschnitt durch Fig. 2 entlang der Linie III. Die Struktur 3 der strukturierten Lage 1 weist Strukturmaxima 4 und Strukturminima 5 auf. Weiterhin ist eine Umstülpung 2 ausgebildet. Die Umstülpung 2 ist durch eine Umformung des Materials der Lage 1 ausgebildet. Die Struktur 3 als solche (also ohne die Umstülpung betrachtet) weist eine Faltung oder eine Krümmung in einer ersten Richtung auf. Bei einer Dreieckswellung wie im vorliegenden Beispiel heißt dies, dass die Struktur 3 aus einer ersten Flanke 6 und einer zweiten Flanke 7 aufgebaut ist, die im Querschnitt zwei Geraden bilden. Hierbei weist die erste Flanke 6 eine erste Flankensteigung und die zweite Flanke 7 eine zweite Flankensteigung auf, deren Vorzeichen entgegengesetzt ist. Auch die Umstülpung 2 ist im vorliegenden Beispiel aus zwei Flanken gebildet, nämlich einer ersten Umstülpflanke 8 und einer zweiten Umstülpflanke 9. Bei Ausbildung der Umstülpung 2 geht die erste Umstülpflanke 8 aus der ersten Flanke 6 und die zweite Umstülpflanke 9 aus der zweiten Flanke 7 hervor. Im Querschnitt bilden die erste Umstülpflanke 8 und die zweite Umstülpflanke 9 zwei Geraden, deren Steigung unterschiedliche Vorzeichen aufweist. Somit liegt die Faltung der Umstülpung 2 im wesentlichen in einer zur Richtung der Faltung der Strukturextrema 4, 5 entgegengesetzten Richtung vor, die Formen der Struktur 3 und der Umstülpungen 2 sind etwa entgegengesetzt.

Weiterhin zeigen Fig. 2 und 3 zwei benachbarte im wesentlichen glatte metallische Lagen 10, die in diesem Beispiel als Mikrostruktur ausgebildete Gegenstrukturen 11 aufweisen. Diese Gegenstrukturen 11 bestehen aus einer wallförmigen Prägung, die in dem Bereich ausgebildet ist, die der Umstülpung 2 benachbart ist. Diese Gegenstruktur 11 greift in die Umstülpung 2 ein. Bevorzugt ist die GegenStruktur 11 so ausgebildet, dass ein Formschluss zwischen Gegenstruktur 11 und Umstülpung 2 vorliegt. Um die Biegsamkeit der durch die Gegenstruktur 11 ansonsten sehr steifen Lage 10 zu erhöhen, sind Entlastungsschlitze 22 vorhanden, vorzugsweise mit gerundeten Enden, um eine Kerbwirkung und ein weiteres Einreißen zu vermeiden. Das in Eingriff stehen bzw. der Formschluss zwischen Umstülpung 2 und Gegenstruktur 11 verhindert in vorteilhafter Weise eine Relativbewegung zwischen der zumindest teilweise strukturierten metallischen Lage 1 und benachbarten im wesentlichen glatten metallischen Lagen 10. Wird aus solchen Lagen 1, 10 ein Wabenkörper, beispielsweise ein Katalysator-Trägerkörper oder Filter zum Einsatz insbesondere im Automobilbau, aufgebaut, so ist bei diesem eine Relativbewegung der Lagen 1, 10 in vorteilhafter Weise verhindert, insbesondere wird ein Teleskopieren des Wabenkörpers vermieden. Die zumindest teilweise strukturierte Lage 1 weist dreiecksförmige Strukturen 3 einer Strukturhöhe H. Die Umstülpungen 2 sind im Bereich der Strukturminima 4 und Strukturmaxima 5 ausgebildet und zwar symmetrisch zu den Strukturextrema 4, 5. Die Höhe h einer Umstülpung 2 ist im vorliegenden Beispiel kleiner als die Strukturhöhe H der Strukturen 3. Weiterhin sind in den im wesentlichen glatten metallischen Lagen 10 Gegenstrukturen 11 ausgebildet, deren Höhe a wesentlich kleiner als die Höhe h der Umstülpungen 2 ist. Beispielhaft ist zu jeder Umstülpung 2 eine Gegenstruktur 11 eingezeichnet, jedoch ist es genauso möglich, nur einen Teil der Umstülpungen 2 mit Gegenstrukturen 11 zu versehen. Bei der Festlegung der relativen Anzahl der Umstülpungen 2 pro Gegenstruktur 11, bei der Auslegung der Form der Gegenstruktur 11 und bei der Entscheidung, ob ein reiner Eingriff oder ein Formschluss der Gegenstruktur 11 mit der Umstülpung 2 auszubilden ist, kann in vorteilhafter Weise die spätere Einsatzart berücksichtigt werden. So werden beispielsweise Katalysator-Trägerkörper, die im Abgassystem eines Otto-Motors eingesetzt werden, anderen Belastungen in Bezug auf Pulsationsfrequenz und -amplitude, sowie Temperatur des Abgases ausgesetzt als beispielsweise bei Diesel- oder Wankelmotoren. Auch die Lage eines Katalysator-Trägerkörpers in Bezug auf einen Verbrennungsmotor (beispielsweise motornah, im Krümmer oder Sammler, usw.) hat starke Auswirkungen auf die Belastungen, denen der Katalysator-Trägerkörper standhalten muss.

Beim Aufbau eines Wabenkörpers wie oben beschrieben, also durch Wickeln oder Winden einer oder mehrerer Lagen, werden für ein Fluid be- oder durchströmbare Hohlräume 12 gebildet, die von den Lagen 1, 10 begrenzt werden. Der radiale Abstand KH zweier benachbarter Wände der Hohlräume 1, 10 entspricht im wesentlichen der Strukturhöhe H.

Neben der in Fig. 2 und 3 gezeigten Art der Gegenstrukturen 11 gibt es noch eine Vielzahl von möglichen Formen von Gegenstrukturen, von denen einige beispielhaft in weiteren Figuren gezeigt werden. Die verschiedenen Arten von Gegenstrukturen 11 können beliebig in einem erfmdungsgemäßen Wabenkörper kombiniert werden. Weiterhin müssen Umstülpungen 2 und Gegenstrukturen 11 auch nicht im gesamten Wabenkörper ausgebildet sein, auch eine bereichsweise Ausbildung, beispielsweise nur in einem axialen oder radialen Teilbereich ist möglich und erfindungsgemäß. In einem anderen Teilbereich können beispielsweise Löcher in den Lagen ausgebildet sein, deren Abmessungen größer, bevorzugt deutlich größer, als die Strukturwiederhollänge der Strukturen 3 ist.

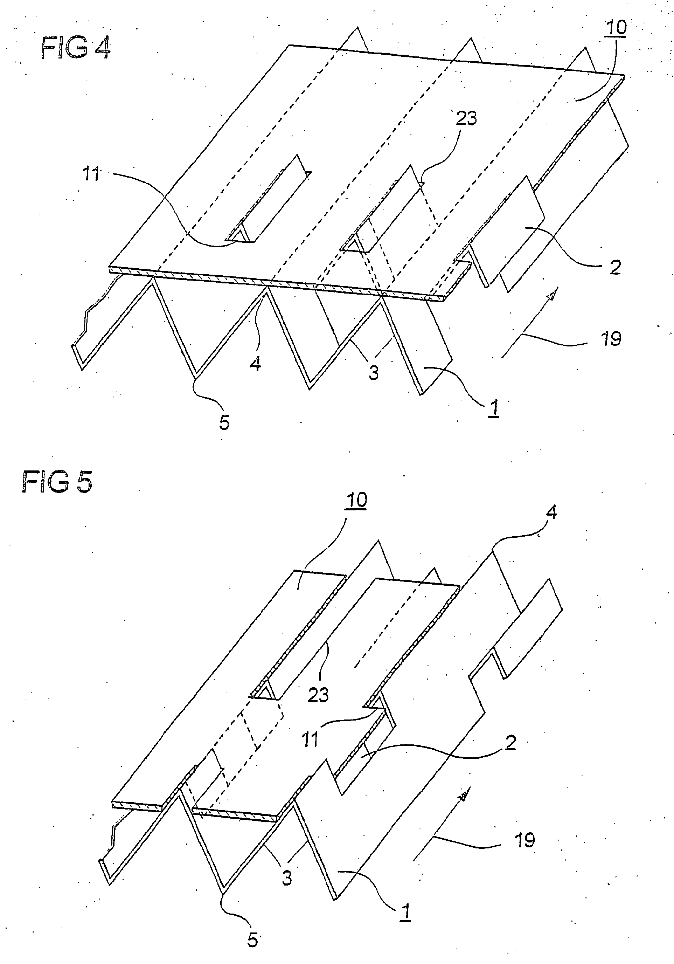

Fig. 4 und 5 zeigen in schematischer perspektivischer Ansicht, wie Löcher 23 als Gegenstrukturen 11 wirken können, indem sie mit Strukturextrema 4, 5 der Struktur 3 oder mit Umstülpungen 2 zusammenwirken. Diese Ausführungsformen sind besonders vorteilhaft, weil die Löcher 23 die Biegsamkeit der im wesenlichen glatten Lagen nicht vermindern, sondern sogar erhöhen.

Solche metallischen Lagen 1, 10 können zumindest teilweise dünne Blechlagen sein, bevorzugt von einer Dicke von weniger als 60 μm, besonders bevorzugt

weniger als 40 μm, insbesondere weniger als 25 μm. Auch können die Lagen 1, 10 auch zumindest teilweise aus einem zumindest teilweise für ein Fluid durchströmbaren Material bestehen, zum Beispiel einem metallischen Fasermaterial, welches aus Pulver, Spänen oder Fasern beispielsweise gesintert oder auch auf eine Tragstruktur, wie beispielsweise ein Streckmetallgitter aufgebracht wird.

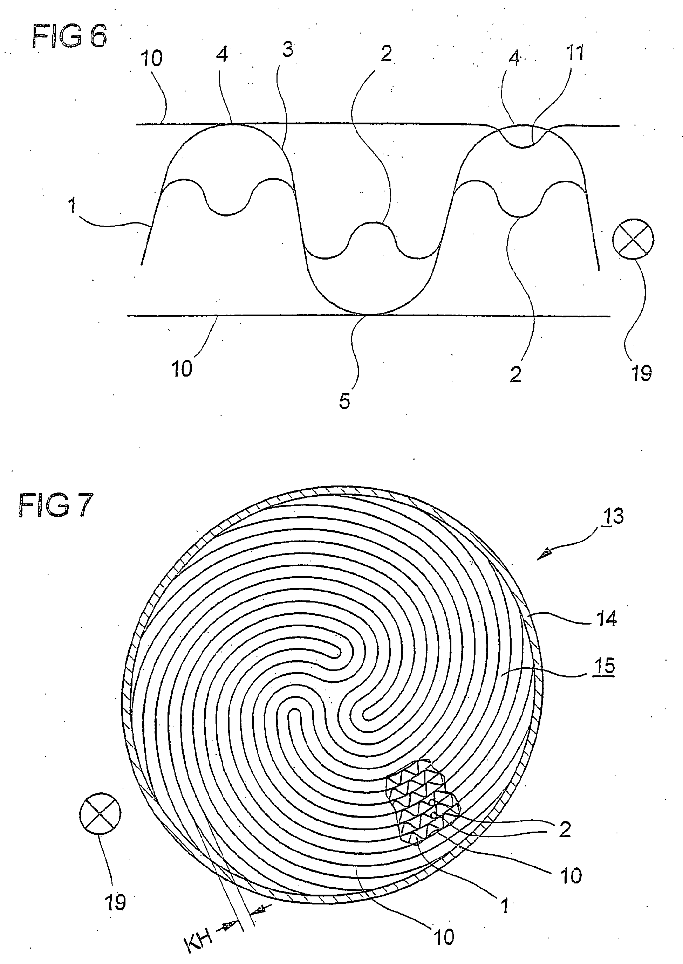

Fig. 6 zeigt ein weiteres Ausführungsbeispiel von Lagen 1, 10 zum Aufbau eines erfindungsgemäßen Wabenkörpers. Hier ist die zumindest teilweise strukturierte Lage 1 Sinus-gewellt und weist Strukturen 3 auf Weiterhin sind Umstülpungen 2 gebildet, die in eine Richtung gekrümmt sind, die entgegengesetzt zu der Krümmung der entsprechenden Strukturen 3 in diesem Bereich ist. Die Umstülpungen 2 sind im Bereich der Strukturmaxima 4 und der Strukturminima 5 symmetrisch zu den Strukturen 3 ausgebildet. Nur ein Teil des die Strukturen 3 bildenden Materials trägt zur Bildung der Umstülpungen 2 bei. Die Gegenstruktur 2 ist als Prägung ausgebildet. Vorteilhafterweise können in Strömungsrichtung 19 auch pro Umstülpung 2 auch mehrere, beispielsweise zwei, Gegenstrukturen 11 ausgebildet sein, die vorteilhafterweise in Strömungsrichtung 19 einen Abstand aufweisen können, der der Ausdehnung der Umstülpung 2 in Strömungsrichtung 19 entspricht.

Fig. 7 zeigt einen erfindungsgemäßen Wabenkörper 13 im Querschnitt, der eine in einem Mantelrohr 14 ausgebildete Wabenstruktur 15 aufweist. Die Wabenstruktur 15 ist aus im wesentlichen glatten metallischen Lagen 10 und zumindest teilweise strukturierten metallischen Lagen 1 aufgebaut, die erfindungsgemäße, nur exemplarisch gezeigten Umstülpungen 2 in den zumindest teilweise strukturierten metallischen Lagen 1 und der Übersichtlichkeit halber nicht gezeigte Gegenstrukturen 11 in den im wesentlichen glatten metallischen Lagen 10 aufweisen. Die metallischen Lagen 1, 10 bilden sich in Strömungsrichtung 19 erstreckende Hohlraumwände, die Hohlräume 12 begrenzen. Der Abstand KH zweier Hohlraumwände 1, 10 in einer Richtung im wesentlichen senkrecht zur Strömungsrichtung 19 ist im vorliegenden Beispiel im wesentlichen durch die Strukturhöhe H definiert. Ein solcher erfindungsgemäßer Wabenkörper 13 ist in Strömungsrichtung 19 von einem Fluid wie beispielsweise einem Abgas durchströmbar.

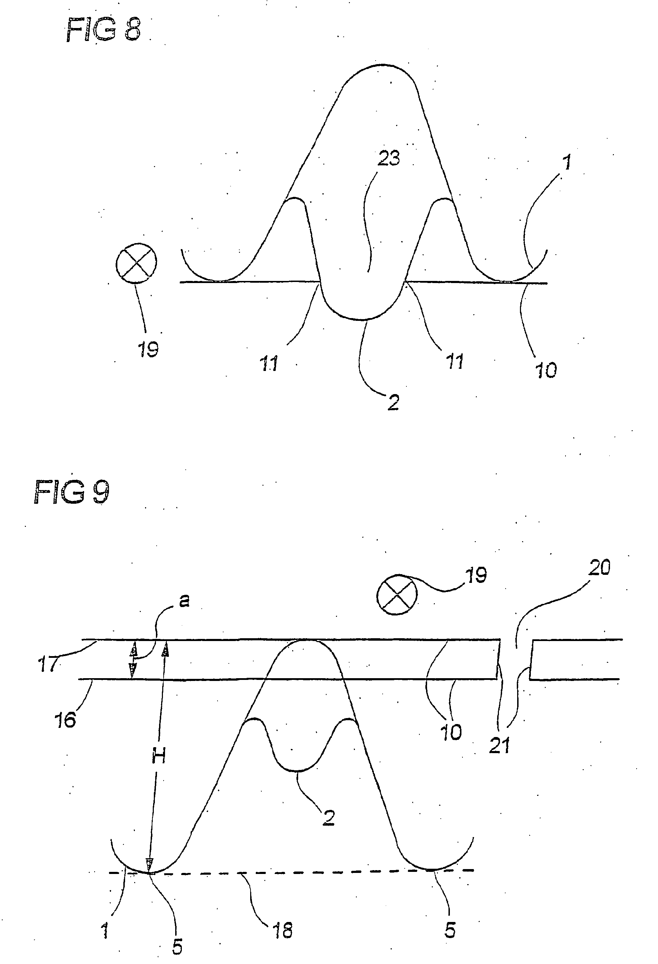

Fig. 8 zeigt schematisch im Querschnitt ein weiteres Beispiel einer Gegenstruktur 11. Die zumindest teilweise strukturierte Lage 1 weist eine Umstülpung 2 auf, die durch die als Loch 23 in der im wesentlichen glatten Lage 10 gebildete Gegenstruktur 11 in einen radial benachbarten Hohlraum hineinragt. Die Anpassung der Abmessungen des Lochs 23 an die Abmessungen der Umstülpung 2 gestatten in vorteilhafter Weise die Ausbildung eines Formschlusses zwischen Umstülpung 2 und Gegenstruktur 11.

Fig. 9 zeigt ein weiteres Beispiel seiner Gegenstruktur 11 schematisch im Querschnitt. Diese Gegenstruktur 11 ist in den Bereichen in Strömungsrichtung 19, in denen Umstülpungen 2 vorliegen, als Prägung in der im wesentlichen glatten Lage 10 ausgebildet. Die Prägung verläuft in transversaler Richtung, also im wesentlichen senkrecht zur Strömungrichtung 19, in der sich die Lagen 1,10 erstrecken. Durch die Prägung weist die im wesentlichen glatte Lage ein Glattniveau 17 und ein Prägeniveau 16 auf. Hierbei entspricht der Abstand des Glattniveaus 17 zur als gestrichelte Linie eingezeichneten Bezugsebene 18, die durch die Strukturminima 5 aufgespannt wird, der Strukturhöhe H, während der Abstand des Prägeniveaus 16 von der Bezugsebene 18 der Differenz der Strukturhöhe H und der Höhe a der Gegenstruktur 11 entspricht. Das Prägeniveau 16 unterscheidet sich also um die Höhe a einer Gegenstruktur 11 vom Glattniveau 17. Um die Verformbarkeit der im wesentlichen glatten Lage 10 zu erhöhen, sind im Bereich der Prägung Perforationen 20 mit Perforationsrändern 21 ausgebildet.

In einem erfindungsgemäßen Wabenkörper 13 werden durch das Zusammenwirken von Umstülpungen 2 und diesen zugeordneten Gegenstrukturen 11 relative Bewegungen der Lagen 1, 10 zueinander in Strömungsrichtung 19 unterbunden. Dies geschieht dadurch, dass Gegenstruktur 11 und Umstülpung 2 miteinander in Eingriff stehen. So kann insbesondere auch das Teleskopieren von Wabenkörpern 13 verhindert werden.

Bezugszeichenliste

| | |
|---|---|
| 1 | zumindest teilweise strukturierte Lage |
| 2 | Umstülpung |
| 3 | Struktur |
| 4 | Strukturmaximum |
| 5 | Strukturminimum |
| 6 | erste Flanke |
| 7 | zweite Flanke |
| 8 | erste Umstülpflanke |
| 9 | zweite Umstülpflanke |
| 10 | im wesentlichen glatte Lage |
| 11 | Gegenstruktur |
| 12 | Hohlraum |
| 13 | Wabenkörper |
| 14 | Mantelrohr |
| 15 | Wabenstruktur |
| 16 | Prägeniveau |
| 17 | Glattniveau |
| 18 | Bezugsebene |
| 19 | Strömungsrichtung |
| 20 | Perforation |
| 21 | Perforationsrand |
| 22 | Entlastungsschlitz |
| 23 | Loch |
| a | Höhe einer Gegenstruktur |
| h | Höhe einer Umstülpung |
| H | Strukturhöhe |

KH    radialer Abstand zweier Hohlraumwände

**Patentansprüche**

1.  Aus abwechselnden im wesentlichen glatten (10) und zumindest teilweise strukturierten (1) Lagen gebildeter Wabenkörper (13), insbesondere Katalysator-Trägerkörper und/oder Filter, vorzugsweise für das Abgassystem eines Automobils, wobei die Lagen (1, 10) für ein Fluid im wesentlichen in einer axialen Strömungsrichtung (19) durchlässige Hohlräume (12) bilden, wobei die strukturierten Lagen (1) Strukturextrema (4, 5) aufweisen, die mit benachbarten im wesentlichen glatten Lagen (10) in Kontakt sind, und wobei die strukturierten Lagen (1) im Bereich ihrer Strulcturextrema (4, 5) Umstülpungen (2) aufweisen, die in die Hohlräume (12) hineinragen und in einem zur Strömungsrichtung (19) senkrechten Querschnitt durch den Wabenkörper (13) eine zu den Strukturextrema (4, 5) etwa inverse Form aufweisen, so dass im Bereich der Umstülpungen (2) Unterbrechungen (22) in den Strukturextrema (4, 5) entstehen, **dadurch gekennzeichnet, dass** im Bereich der Umstülpungen (2) und/oder der Strukturextrema (4, 5) Gegenstrukturen (11) in den im wesentlichen glatten Lagen (10) ausgebildet sind, die mit den Strukturextrema (4, 5) und/oder mit den Umstülpungen (2) in Eingriff stehen.

2.  Wabenkörper (13) nach Anspruch 1, **dadurch gekennzeichnet, dass** die Gegenstrukturen (11) in einem formschlüssigen Kontakt mit zumindest einem Teil der Strukturextrema (4, 5) und/oder Umstülpungen (2) sind.

3.  Wabenkörper (13) nach Anspruch 1 oder 2, **dadurch gekennzeichnet, dass** die Gegenstrukturen in den im wesentlichen glatten Lagen (10) so ausgebildet sind, dass die Biegsamkeit dieser Lagen (10) genügend groß zum Wickeln bleibt, insbesondere durch Löcher und/oder Unterbrechungen in den Gegenstrukturen (11).

4.  Wabenkörper (13) nach Anspruch 3, **dadurch gekennzeichnet, dass** der Wabenkörper (13) durch

    a) Wickeln mindestens einer Lage (1) oder
    b) Stapeln einer Mehrzahl von Lagen (1, 10) zu mindestens einem Stapel und Verwinden mindestens eines Stapels

    ausgebildet ist.

5.  Wabenkörper (13) nach einem der vorhergehenden Ansprüche, bei dem die Umstülpungen (2) in zumindest teilweise mit einer Strukturhöhe (H) strukturierten Lagen (1) ausgebildet sind, **dadurch gekennzeichnet, dass** die Höhe (h) der Umstülpungen (2) kleiner oder gleich der Strukturhöhe (H) ist.

6.  Wabenkörper (13) nach einem der Ansprüche 1 bis 4, bei dem Umstülpungen (2) in zumindest teilweise mit einer Strukturhöhe (H) strukturierten Lagen (1) ausgebildet sind, **dadurch gekennzeichnet, dass** die Höhe (h) der Umstülpungen (2) größer als die Strukturhöhe (H) ist.

7.  Wabenkörper (13) nach einem der vorhergehenden Ansprüche, **dadurch gekennzeichnet, dass** die Gegenstruktur (11) eine Erhöhung oder Vertiefung ist, deren Höhe (a) kleiner, bevorzugt wesentlich kleiner, als die Höhe (h) der Umstülpungen (2) ist.

8.  Wabenkörper (13) nach einem der vorhergehenden Ansprüche, **dadurch gekennzeichnet, dass** jede Umstülpung (2) mit einer Gegenstruktur (11) in Eingriff steht.

9.  Wabenkörper (13) nach einem der vorhergehenden Ansprüche, **dadurch gekennzeichnet, dass** zumindest ein Teil der Gegenstrukturen (11) aus Umstülpungen (2) besteht.

10. Wabenkörper (13) nach einem der vorhergehenden Ansprüche, **dadurch gekennzeichnet, dass** zumindest ein Teil der Gegenstrukturen (11) aus Prägungen besteht.

11. Wabenkörper (13) nach Anspruch 10, **dadurch gekennzeichnet, dass** die Prägungen als Mikrostrukturen ausgebildet sind, die im wesentlichen transversal zur axialen Strömungsrichtung (19) des Wabenkörpers (13) verlaufen.

12. Wabenkörper (13) nach Anspruch 10 oder 11, **dadurch gekennzeichnet, dass** zumindest ein Teil der Gegenstrukturen (11) aus mindestens zwei in Strömungsrichtung beabstandeten Prägungen besteht.

13. Wabenkörper (13) nach einem der Ansprüche 10 bis 12, **dadurch gekennzeichnet, dass** die Prägungen Perforationen, bevorzugt Mikroperforationen aufweisen.

14. Wabenkörper (13) nach einem der vorhergehenden Ansprüche, **dadurch gekennzeichnet, dass** zumindest ein Teil der Gegenstrukturen (11) als Löcher (23) ausgebildet ist.

15. Wabenkörper (13) nach einem der vorhergehenden Ansprüche, **dadurch gekennzeichnet, dass** zumindest ein Teil der Gegenstrukturen (11) als Löcher in den im wesentlichen glatten Lagen (10) ausgebildet sind, in die die Strukturextrema (4, 5) und/oder die Umstülpungen (2) hineinragen, insbesondere im wesentlichen formschlüssig hineinragen.

**16.** Wabenkörper (13) nach einem der Ansprüche 3 bis 15, **dadurch gekennzeichnet, dass** zumindest ein Teil der Gegenstrukturen (11) in den zumindest teilweise strukturierten Lagen (1) ausgebildet sind.

**17.** Wabenkörper (13) nach einem der vorhergehenden Ansprüche, **dadurch gekennzeichnet, dass** der Quotient aus

a) der Summe der Höhe (h) der Umstülpung (2) und der Höhe (a) der Gegenstruktur (11) und
b) dem radialen Abstand (KH) zweier Wände der Hohlräume (1, 10) kleiner ist als 1.

**18.** Wabenkörper (13) nach einem der vorhergehenden Ansprüche, **dadurch gekennzeichnet, dass** zumindest ein Teil der Lagen (1, 10) metallische Lagen sind.

**19.** Wabenkörper (13) nach Anspruch 18, **dadurch gekennzeichnet, dass** zumindest ein Teil der metallischen Lagen (1, 10) Blechlagen sind.

**20.** Wabenkörper (13) nach Anspruch 19, **dadurch gekennzeichnet, dass** die Blechlagen (1, 10) eine Dicke von weniger als 60 µm, bevorzugt weniger als 40µm, besonders bevorzugt weniger als 25 µm aufweisen.

**21.** Wabenkörper (13) nach einem der Ansprüche 18 bis 20, **dadurch gekennzeichnet, dass** zumindest ein Teil der metallischen Lagen (1, 10) zumindest teilweise für ein Fluid durchströmbar ist.

**22.** Wabenkörper (13) nach Anspruch 21, **dadurch gekennzeichnet, dass** zumindest ein Teil der zumindest teilweise für ein Fluid durchströmbaren metallischen Lagen (1, 10) aus einem metallischen Fasermaterial, insbesondere einem gesinterten metallischen Fasermaterial ausgebildet ist.

**23.** Wabenkörper (13) nach einem der vorhergehenden Ansprüche, **dadurch gekennzeichnet, dass** zumindest ein Teil der Lagen (1, 10) aus einem Kompositmaterial, bevorzugt einem Kompositmaterial aus keramischen und metallischen Fasern, aufgebaut ist.

## Claims

**1.** A honeycomb body (13) formed from alternating, essentially even (10) and at least partially structured (1) layers, in particular catalytic converter support and/or filter, preferably for the exhaust system of an automobile, wherein the layers (1, 10) form fluid permeable cavities (12) essentially in an axial flow direction (19), and wherin the structured layers (1) feature structural extremities (4, 5), which are in contact with adjacent, essentially even layers (10), and wherin the structured layers (1) feature inverted sections (2) in the area of their structural extremities (4, 5), which protrude into the cavities (12) and in a cross section through the honeycomb body (13) that is perpendicular to the direction of flow (19) feature an approximately inverse form to the structural extremities (4, 5), so that recesses (22) are generated in the structural extremities (4, 5) in the area of the inverted sections (2), **characterized in that** in the area of the inverted sections (2) and/or the structural extremities (4, 5), counter-structures (11) are formed in the essentially even layers (10) that are engaged with the structural extremities (4, 5) and/or with the inverted sections (2).

**2.** The honeycomb body (13) as claimed in claim 1, **characterized in that** the counter-structures (11) are in a form closure contact with at least a part of the structural extremities (4, 5) and/or inverted sections (2).

**3.** The honeycomb body (13) as claimed in claim 1 or 2, **characterized in that** the counter-structures in the essentially even layers (10) are formed so that the flexibility of these layers (10) remains sufficiently great for coiling, in particular by means of holes and/or recesses in the counter-structures (11).

**4.** The honeycomb body (13) as claimed in claim 3, **characterized in that** the honeycomb body (13) is formed by

a) coiling of at least one layer (1) or
b) stacking a plurality of layers (1, 10) to at least one stack and twisting of at least one stack.

**5.** The honeycomb body (13) as claimed in one of the preceding claims, in which the inverted sections (2) are formed in structured layers (1) at least partially with a structure height (H), **characterized in that** the height (h) of the inverted sections (2) is less than or equal to the structure height (H).

**6.** The honeycomb body (13) as claimed in one of claims 1 to 4, in which inverted sections (2) are formed in structured layers (1) at least partially with a structure height (H), **characterized in that** the height (h) of the inverted sections (2) is greater than the structure height (H).

**7.** The honeycomb body (13) as claimed in one of the preceding claims, **characterized in that** the counter-structure (11) is an elevation or depression, the height (a) of which is smaller, preferably considerably smaller, than the height (h) of the inverted sections (2).

8. The honeycomb body (13) as claimed in one of the preceding claims, **characterized in that** every inverted section (2) is in engagement with a counter-structure (11).

9. The honeycomb body (13) as claimed in one of the preceding claims, **characterized in that** at least some of the counter-structures (11) comprise inverted sections (2).

10. The honeycomb body (13) as claimed in one of the preceding claims, **characterized in that** at least some of the counter-structures (11) comprise embossings.

11. The honeycomb body (13) as claimed in claim 10, **characterized in that** the embossings are formed as microstructures which run essentially transversally to the axial direction of flow (19) of the honeycomb body (13).

12. The honeycomb body (13) as claimed in claim 10 or 11, **characterized in that** at least some of the counter-structures (11) comprise at least two embossings spaced apart in the direction of flow.

13. The honeycomb body (13) as claimed in one of claims 10 to 12, **characterized in that** the embossings have perforations, preferably microperforations.

14. The honeycomb body (13) as claimed in one of the preceding claims, **characterized in that** at least some of the counter-structures (11) are formed as holes (23).

15. The honeycomb body (13) as claimed in one of the preceding claims, **characterized in that** at least some of the counter-structures (11) are constituted as holes in the essentially even layers (10), into which the structural extremities (4, 5) and/or the inverted sections (2) protrude, in particular essentially with a form closure.

16. The honeycomb body (13) as claimed in one of claims 3 to 15, **characterized in that** at least some of the counter-structures (11) are formed in the layers (1) that are at least partially structured.

17. The honeycomb body (13) as claimed in one of the preceding claims, **characterized in that** the quotient of

   a) the sum of the height (h) of the inverted section (2) and the height (a) of the counter-structure (11) and
   b) the radial distance (KH) between two walls of the cavities (1,10) is less than 1.

18. The honeycomb body (13) as claimed in one of the preceding claims, **characterized in that** at least some of the layers (1,10) are metallic layers.

19. The honeycomb body (13) as claimed in claim 18, **characterized in that** at least some of the metallic layers (1,10) are sheet-metal layers.

20. The honeycomb body (13) as claimed in claim 19, **characterized in that** the sheet-metal layers (1, 10) have a thickness of less than 60 $\mu$m, preferably less than 40 $\mu$m, with particular preference less than 25 $\mu$m.

21. The honeycomb body (13) as claimed in one of claims 18 to 20, **characterized in that** at least some of the metallic layers (1, 10) at least partially allow a fluid to flow through.

22. The honeycomb body (13) as claimed in claim 21, **characterized in that** at least some of the metallic layers (1, 10) that at least partially allow a fluid to flow through are formed from a metallic fiber material, in particular a sintered metallic fiber material.

23. The honeycomb body (13) as claimed in one of the preceding claims, **characterized in that** at least some of the layers (1, 10) are composed of a composite material, with preference a composite material consisting of ceramic and metallic fibers.

**Revendications**

1. Corps en nids d'abeilles (13) formé de couches alternantes, sensiblement lisses (10) et au moins partiellement structurées (1), notamment un corps support de catalyseur et/ou un filtre, de préférence pour le système de gaz d'échappement d'une automobile, dans quel cas les couches (1, 10) forment des cavités (12) étant perméables pour un fluide dans une direction d'écoulement sensiblement axiale (19), les couches structurées (1) présentant des extrémités de structures (4, 5) qui sont en contact avec des couches adjacentes, sensiblement lisses (10), et dans quel cas les couches structurées (1) ont des parties inversées (2) dans la région de leurs extrémités de structures (4, 5), lesquelles parties inversées s'étendent dans les cavités (12) et ont une forme environ inverse par rapport aux extrémités de structures (4, 5) dans une section transversale à travers le corps en nids d'abeilles (13) perpendiculaire par rapport à la direction d'écoulement (19), de sorte que dans la région des parties inversées (2) des dégagements (22) sont générés dans les extrémités de structures (4, 5), **caractérisé en ce que** dans la région des parties inversées (2) et/ou des extrémités de structures (4, 5) des contre-structures (11) sont formées dans les couches sensiblement lisses (10) qui sont en engagement avec les extrémités de structures (4, 5) et/ou avec les parties inversées (2).

2. Corps en nids d'abeilles (13) selon la revendication 1, **caractérisé en ce que** les contre-structures (11) se trouvent dans un contact par coopération de formes avec au moins une partie des extrémités de structures (4, 5) et/ou avec les parties inversées (2).

3. Corps en nids d'abeilles (13) selon la revendication 1 ou 2, **caractérisé en ce que** les contre-structures sont réalisées de manière telle dans les couches sensiblement lisses (10) que la flexibilité de ces couches (10) reste assez grande pour l'enroulement, notamment par des trous et/ou des dégagements dans les contre-structures (11).

4. Corps en nids d'abeilles (13) selon la revendication 3, **caractérisé en ce que** le corps en nids d'abeilles (13) est formé par

   a) l'enroulement d'au moins une couche (1) ou
   b) l'empilement d'une pluralité de couches (1, 2) en au moins une pile et enlacement d'au moins une pile.

5. Corps en nids d'abeilles (13) selon l'une des revendications précédentes, où les parties inversées (2) sont formées au moins partiellement dans des couches structurées (1) avec une hauteur de structure (H), **caractérisé en ce que** la hauteur (h) des parties inversées (2) est inférieure ou égale à la hauteur de structure (H).

6. Corps en nids d'abeilles (13) selon l'une des revendications 1 à 4, où des parties inversées (2) sont formées dans des couches structurées (1) au moins partiellement avec une hauteur de structure (H), **caractérisé en ce que** la hauteur (h) des parties inversées est supérieure à la hauteur de structure (H).

7. Corps en nids d'abeilles (13) selon l'une des revendications précédentes, **caractérisé en ce que** la contre-structure (11) est une élévation ou un creux, dont la hauteur (a) est inférieure, de préférence sensiblement inférieure à la hauteur (h) des parties inversées (2).

8. Corps en nids d'abeilles (13) selon l'une des revendications précédentes, **caractérisé en ce que** chaque partie inversée (2) est dans un engagement avec une contre-structure (11).

9. Corps en nids d'abeilles (13) selon l'une des revendications précédentes, **caractérisé en ce qu'**au moins une partie des contre-structures (11) consiste en des parties inversées (2).

10. Corps en nids d'abeilles (13) selon l'une des revendications précédentes, **caractérisé en ce qu'**au moins une partie des contre-structures (11) consiste en des embossages.

11. Corps en nids d'abeilles (13) selon la revendication 10, **caractérisé en ce que** les embossages sont formés comme microstructures, qui s'étendent sensiblement transversalement par rapport à la direction d'écoulement (19) du corps en nids d'abeilles (13).

12. Corps en nids d'abeilles (13) selon la revendication 10 ou 11, **caractérisé en ce qu'**au moins une partie des contre-structures (11) consiste en au moins deux embossages agencés à distance l'un de l'autre dans la direction d'écoulement.

13. Corps en nids d'abeilles (13) selon l'une des revendications 10 à 12, **caractérisé en ce que** les embossages ont des perforations, de préférence des micro-perforations.

14. Corps en nids d'abeilles (13) selon l'une des revendications précédentes, **caractérisé en ce qu'**au moins une partie des contre-structures (11) est réalisée sous forme de trous (23).

15. Corps en nids d'abeilles (13) selon l'une des revendications précédentes, **caractérisé en ce qu'**au moins une partie des contre-structures (11) est réalisée sous forme de trous dans les couches sensiblement lisses (10), dans lesquelles les extrémités de structures (4, 5) et/ou les parties inversées (2) s'étendent vers l'intérieur, notamment sensiblement par coopération de formes.

16. Corps en nids d'abeilles (13) selon l'une des revendications 3 à 15, **caractérisé en ce qu'**au moins une partie des contre-structures (11) est formée dans les couches au moins partiellement structurées (1).

17. Corps en nids d'abeilles (13) selon l'une des revendications précédentes, **caractérisé en ce que** le quotient de

   a) la somme de la hauteur (h) de la partie inversée (2) et de la hauteur (a) de la contre-structure (11) et
   b) de la distance radiale (KH) de deux parois des cavités (1, 10) est plus petite que 1.

18. Corps en nids d'abeilles (13) selon l'une des revendications précédentes, **caractérisé en ce qu'**au moins une partie des couches (1, 10) sont des couches métalliques.

**19.** Corps en nids d'abeilles (13) selon la revendication 18, **caractérisé en ce qu'**au moins une partie des couches métalliques (1, 10) sont des couches de tôle.

**20.** Corps en nids d'abeilles (13) selon la revendication 19, **caractérisé en ce que** les couches de tôle (1, 10) ont une épaisseur de moins que 60 $\mu$m, de préférence de moins que 40 $\mu$m, particulièrement préféré de moins que 25 $\mu$m.

**21.** Corps en nids d'abeilles (13) selon l'une des revendications 18 à 20, **caractérisé en ce qu'**au moins une partie des couches métalliques (1, 10) peut au moins partiellement être traversée par un fluide.

**22.** Corps en nids d'abeilles (13) selon la revendication 21, **caractérisé en ce qu'**au moins une partie des couches métalliques (1, 10) pouvant au moins partiellement être traversée par un fluide est réalisée d'un matériau fibreux métallique, notamment d'un matériau fibreux métallique fritté.

**23.** Corps en nids d'abeilles (13) selon l'une des revendications précédentes, **caractérisé en ce qu'**au moins une partie des couches (1, 2) est composée d'un matériau composite de fibres céramiques et métalliques.

FIG 1

FIG 2

10

11

22

1

2

III

19

10

12

6

4

7

5

3

FIG 3

4          12                    4                    10

11

11

2

h

H,KH

2  3

6  7

10      5      11  8  2  9  1  5

FIG 4

FIG 5

## FIG 6

## FIG 7

## FIG 8

## FIG 9